# EUROPÄISCHE PATENTSCHRIFT

(11) **EP 2 526 003 B1**
(45) Veröffentlichungstag und Bekanntmachung des Hinweises auf die Patenterteilung: **06.02.2019**
(21) Anmeldenummer: 10787353.1
(22) Anmeldetag: 25.11.2010
(51) Int. Cl.: B60W 30/18, B60W 30/16, B60W 10/06, B60W 10/18

(54) **ANFAHRASSISTENT FÜR KRAFTFAHRZEUGE**
STARTING ASSISTANT FOR MOTOR VEHICLES
SYSTÈME D'AIDE AU DÉMARRAGE POUR VÉHICULES AUTOMOBILES

(30) Priorität: 20.01.2010 DE 102010001045
(43) Veröffentlichungstag der Anmeldung: 28.11.2012
(73) Patentinhaber: Robert Bosch GmbH, 70442 Stuttgart (DE)
(72) Erfinder: MICHI, Harald, 75248 Oelbronn-Duerrn (DE)
(86) Internationale Anmeldenummer: PCT/EP2010/068210
(87) Internationale Veröffentlichungsnummer: WO 2011/088923

(56) Entgegenhaltungen:
- EP-A1- 2 014 526
- WO-A1-2009/037138
- DE-A1- 10 047 748
- DE-A1- 10 303 415
- DE-A1-102005 050 277

## Beschreibung

### Stand der Technik

Die Erfindung betrifft einen Anfahrassistenten für Kraftfahrzeuge, mit einem Anfahrregler zur Einleitung und Steuerung eines Anfahrvorgangs.

Kraftfahrzeuge werden zunehmend mit Assistenzsystemen ausgerüstet, die den Fahrer bei der Führung des Kraftfahrzeugs unterstützen und ihm gewisse Aufgaben abnehmen. Ein Beispiel eines solchen Assistenzsystems ist eine adaptive Fahrgeschwindigkeitsregelung, die auch als ACC-System (Adaptive Cruise Control) bezeichnet wird und eine automatische Geschwindigkeitsregelung sowie eine automatische Regelung des Abstands zu einem vorausfahrenden Fahrzeug ermöglicht. Fortgeschrittene Systeme dieser Art ermöglichen es auch, das eigene Fahrzeug beispielsweise beim Auffahren auf ein Stauende automatisch in den Stand zu bremsen, und können, wenn sich das vorausfahrende Fahrzeug wieder in Bewegung setzt, ein automatisches Anfahren bewirken. Solche Systeme werden als "Full-Speed Range ACC" (ACC-FSR) oder "ACC/Stop and Go" bezeichnet. Unter einem Anfahrassistenten wird derjenige Teil eines solchen Systems verstanden, der nach einem Stillstand das automatische oder gegebenenfalls durch einen Befehl des Fahrers ausgelöste Wiederanfahren des Fahrzeugs steuert.

DE 103 03 415 A1 beschreibt ein Verfahren zur Optimierung des Fahrverhaltens an Fahrzeugen, bei dem beim Anfahren des Fahrzeuges an einer Steigung das Lösen der über eine Steuereinrichtung ansteuerbaren Bremseinrichtung verzögert gegenüber dem Aufbau des Antriebsmomentes erfolgt und bei dem bei einem Anfahrvorgang in der Ebene oder im Gefälle eine Deaktivierung der Bremseinrichtung zeitlich vor oder aber gleichzeitig mit dem Aufbau des erforderlichen Antriebsmomentes erfolgt.

WO 2009/037138 A1 beschreibt ein Verfahren zur Anfahrunterstützung bei einem Kraftfahrzeug, bei dem zum Anfahren an einer Steigung ein Anfahrmoment verwendet wird, welches sich aus einem steigungsabhängigen Anteil und einem motorzustandsbedingten Anteil zusammensetzt.

DE 10 2005 050 277 A1 betrifft eine Abstands- und Geschwindigkeitsregelung mit Anpassung der Regelparameter an eine automatisch erkannte Stausituation. Im Staubetrieb kann eine Regelung auf der Grundlage einer reduzierten Dynamik durchgeführt werden, so dass Anfahr-, Beschleunigungs- und Bremsvorgänge im Staubetrieb mit einer reduzierten Dynamik erfolgen.

### Vorteile der Erfindung

Die Erfindung mit den in Anspruch 1 angegebenen Merkmalen schafft einen Anfahrassistenten, der eine erhöhte gefühlte Verkehrssicherheit mit einer erhöhten Fahrdynamik vereinbart. Zu diesem Zweck weist der Anfahrassistent eine Entscheidungseinrichtung auf, die dazu ausgebildet ist, abhängig von einem Fahrbahngefälle und von einer Soll-Anfahrdynamik eine Anfahrstrategie auszuwählen aus wenigstens einer ersten Anfahrstrategie und einer zweiten Anfahrstrategie, wobei die erste Anfahrstrategie eine Strategie zum von einem Antriebssystem getriebenen Anfahren ist und die zweite Anfahrstrategie eine Strategie zum Anfahren im wesentlichen durch eine Hangabtriebskraft ist. Das vom Antriebssystem getriebene Anfahren ist beispielsweise ein motorgetriebenes Anfahren.

Unter der Auswahl einer Anfahrstrategie soll hier die Auswahl einer Regeleinrichtung und/oder einer Regelstrategie einer Regeleinrichtung zur Regelung des Anfahrvorgangs verstanden werden.

Unter der Hangabtriebskraft soll hier die Hangabtriebskomponente der auf das eigene Fahrzeug in Fahrtrichtung wirkenden Gewichtskraft des Fahrzeugs, ggf. einschließlich Anhänger, verstanden werden. Dies ist diejenige Komponente der Gewichtskraft, die parallel zur Fahrbahnoberfläche in Fahrtrichtung verläuft.

Unter dem Anfahren soll hier das Inbewegungsetzen des Fahrzeuges aus dem Stillstand heraus verstanden werden, beispielsweise bis zum Erreichen einer vorgegebenen Fahrgeschwindigkeit, beispielsweise 15 km/h. Unter einem Anfahren im wesentlichen durch eine Hangabtriebskraft soll ein Anfahren verstanden werden, bei dem die Bewegung des Fahrzeugs hauptsächlich, durch die Hangabtriebskraft bewirkt wird. Beispielsweise kann das Anfahren erfolgen, ohne daß zum Anfahren eine Antriebsleistung vom Antriebssystem des Fahrzeugs angefordert wird. Beispielsweise kann während des Anfahrens ein Leerlaufzustand des Antriebssystems aufrechterhalten werden.

Unter einer Soll-Anfahrdynamik soll hier wenigstens ein Parameter verstanden werden, der ein gewünschtes dynamisches Verhalten des eigenen Fahrzeugs beim Anfahren aus dem Stillstand beschreibt, beispielsweise ein das Beschleunigungsverhalten charakterisierender Parameter wie z. B. eine Sollbeschleunigung, eine Zeitlücke und/oder ein Mindestabstand, mit der/dem im Rahmen der Abstandsregelung ein anfahrendes vorausfahrendes Fahrzeug verfolgt wird. Die Soll-Anfahrdynamik umfasst z.B. wenigstens einen solchen Beschleunigungsparameter. Vorzugsweise ist die Soll-Anfahrdynamik variabel, z.B. einstellbar. Beispielsweise kann die Soll-Anfahrdynamik Teil eines Dynamikprofils für das ACC-System sein.

Unter dem Fahrbahngefälle soll hier das Gefälle der Fahrbahn in Fahrtrichtung verstanden werden.

Indem bei ausreichend großem Fahrbahngefälle mittels der zweiten Anfahrstrategie im wesentlichen durch die Hangabtriebskraft angefahren wird, kann dem Fahrer insbesondere bei einer relativ geringen Soll-Anfahrdynamik ein sicheres Gefühl vermittelt werden, da ein sehr sanftes und langsames Anrollen ermöglicht wird. Bei gleichem Fahrbahngefälle und einer größeren Soll-Anfahrdynamik kann beispielsweise hingegen eine Anfahrstrategie zum vom Antriebssystem getriebenen Anfahren ausgewählt werden, um ein zügigeres Anfahren zu ermöglichen.

Vorteilhafte Ausgestaltungen und weiterbildungen der Erfindung ergeben sich aus den Unteransprüchen.

Der Anfahrassistent weist erfinungsgemäss eine Erkennungseinrichtung zum Erkennen verschiedener vorgegebener Kategorien von Fahrumgebungen und zur Auswahl einer an die erkannte Fahrumgebung angepaßten Soll-Anfahrdynamik auf. Unter einer "Fahrumgebung" sollen hier allgemein für das gewünschte Fahrverhalten maßgebliche Merkmale der Umgebung des eigenen Fahrzeugs, beispielsweise die Art der Straße, auf der sich das eigene Fahrzeug befindet, einschließlich der Verkehrssituation verstanden werden.

Dadurch kann für verschiedene Fahrumgebungen ein jeweils in geeigneter Weise von dem Fahrbahngefälle abhängiges, passendes Anfahrverhalten erreicht werden. Beispielsweise kann im Stop & Go-Verkehr auf einer Autobahn eine geringe Soll-Anfahrdynamik ausgewählt werden, während beispielsweise im Stadtverkehr eine hohe Soll-Anfahrdynamik ausgewählt werden kann.

Im allgemeinen ist im Stop & Go-Verkehr die Wahrscheinlichkeit hoch, daß bereits kurz nach dem Anfahren aufgrund der Verkehrssituation oder eines Fahrbahngefälles erneut abgebremst werden muß. Durch eine niedrige Soll-Anfahrdynamik kann dann bei ausreichendem Fahrbahngefälle mittels der Hangabtriebskraft angefahren werden. Dabei kann durch ein vom Anfahrassistenten gesteuertes sehr langsames Anrollen im Stop & Go-Verkehr beim Anfahren bergab ein sicheres Gefühl vermittelt werden, und der Anfahrvorgang kann als besonders komfortabel empfunden werden. Dies trägt zu einer entspannteren Wahrnehmung der Verkehrssituation durch den Fahrer bei.

Hingegen zeigt die Erfahrung, daß im Stadtverkehr im allgemeinen zügig angefahren wird. Durch Auswahl einer entsprechenden hohen Soll-Anfahrdynamik kann hier auch bei einem höheren Fahrbahngefälle die Entscheidungseinrichtung eine Anfahrstrategie zum vom Antriebssystem getriebenen Anfahren auswählen, so daß die Anfahrdynamik erhöht wird. Durch eine relativ zügige Beschleunigung kann somit beispielsweise während einer Grünphase einer Ampel der Verkehrsfluß verbessert werden.

Bevorzugt ist die Erkennungseinrichtung dazu ausgebildet, bei der Erkennung der Kategorie zu unterscheiden, ob sich das eigene Fahrzeug auf einer innerstädtischen Straße oder auf einer überörtlichen oder überregionalen Straße befindet. Zusätzlich oder alternativ kann die Erkennungseinrichtung dazu ausgebildet sein, bei der Erkennung der Kategorie zu unterscheiden, ob sich das eigene Fahrzeug auf einer kreuzungsfreien Straße oder auf einem Straßenabschnitt vor einer Kreuzung oder Einmündung befindet. So ist insbesondere zu erwarten, daß beim Stillstand des Verkehrs auf einer kreuzungsfreien Straße eine Stop & Go-Situation vorliegt, so daß eine geringere Soll-Anfahrdynamik ausgewählt wird, während beim Stillstand des Verkehrs insbesondere auf einer innerstädtischen Straße oder vor einer Kreuzung oder Einmündung davon auszugehen ist, daß ein zügigeres Anfahren erwünscht ist, so daß eine höhere Soll-Anfahrdynamik ausgewählt wird.

Bevorzugt weist der Anfahrassistent weiter eine Sensoreinrichtung zum Erfassen wenigstens einer vom Fahrbahngefälle am Ort des Fahrzeugs abhängigen Meßgröße auf, beispielsweise der Längsbeschleunigung des eigenen Fahrzeugs. Dies erlaubt es, das die Hangabtriebskraft bewirkende Fahrbahngefälle unmittelbar am Fahrzeug zu erfassen. Insbesondere bei stillstehendem Fahrzeug hängt die Längsbeschleunigung direkt von dem Fahrbahngefälle ab und ist der Hangabtriebskraft proportional.

Bevorzugt umfaßt die Sensoreinrichtung einen Längsbeschleunigungssensor zur Erfassung der Längsbeschleunigung. Beispielsweise kann der Längsbeschleuniger Teil eine ESP-Systems sein (Electronic Stability Program; elektronisches Stabilitätsprogramm), auch als elektronische Stabilitätskontrolle oder Fahrdynamikregelung bezeichnet. Somit kann der vorhandene Längsbeschleunigungssensor mitbenutzt werden.

Bevorzugt ist die Entscheidungseinrichtung dazu ausgebildet, die zweite Anfahrstrategie zum Anfahren im wesentlichen durch eine Hangabtriebskraft zu wählen, wenn das Fahrbahngefälle größer ist als ein von der Soll-Anfahrdynamik bzw. der erkannten Fahrumgebung abhängiger Referenzwert. Indem je nach Soll-Anfahrdynamik mit einem unterschiedlichen Referenzwert verglichen wird, kann durch eine einfache Entscheidungsfunktion eine hohe gefühlte Sicherheit mit situationsangepasster Fahrdynamik vereinbart werden.

Erfindungsgemäss ist der Anfahrassistent dazu ausgebildet, beim Anfahren gemäß der zweiten Anfahrstrategie den Anfahrvorgang so zu steuern, daß kein Antriebsmoment des Antriebssystems angefordert wird. Beispielsweise kann der Anfahrregler dazu ausgebildet sein, beim Anfahren gemäß der ersten Anfahrstrategie ein Antriebsmoment des Antriebssystems anzufordern, nicht jedoch beim Anfahren gemäß der zweiten Anfahrstrategie.

Bevorzugt ist der Anfahrregler dazu ausgebildet, beim Anfahren gemäß der zweiten Anfahrstrategie ein Bremsmoment eines Bremssystems zu steuern, um den Anfahrvorgang zu steuern. Insbesondere wird vorzugsweise das Bremsmoment des Bremssystems gesteuert, jedoch kein Antriebsmoment des Antriebssystems angefordert. Beispielsweise kann eine Regelung des Anfahrvorgangs allein durch Steuerung oder Regelung des Bremsmoments des Bremssystems erfolgen. So kann beispielsweise auch bei hohem Gefälle ein sicheres und komfortables Anfahren ermöglicht werden.

### Kurze Beschreibung der Zeichnungen

Ein Ausführungsbeispiel der Erfindung ist in den Zeichnungen dargestellt und in der nachfolgenden Beschreibung näher erläutert.

Es zeigen:
- Figur 1: ein Blockdiagramm eines erfindungsgemäßen Anfahrassistenten; und
- Figur 2: eine Graphik, die eine in einer Entscheidungseinrichtung des Anfahrassistenten implementierte Entscheidungsfunktion illustriert.

### Beschreibung des Ausführungsbeispiels

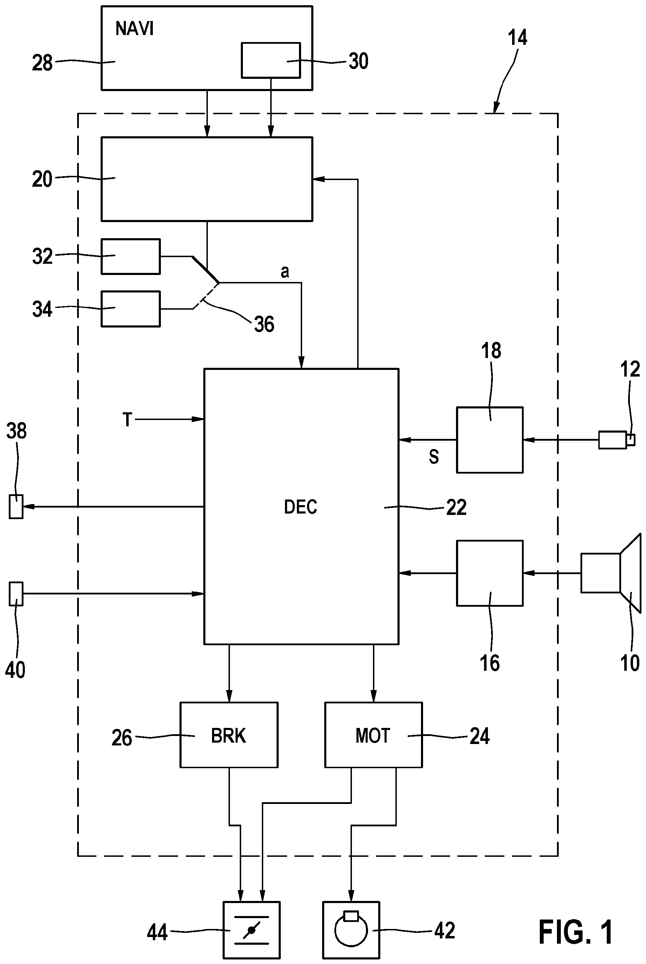

Der in Fig. 1 gezeigte Anfahrassistent umfaßt wenigstens einen Ortungssensor 10, eine Längsbeschleunigungssensoreinrichtung 12 mit einem Längsbeschleunigungssensor und ein Datenverarbeitungssystem 14.

Der Ortungssensor 10 dient als Ortungssystem zur Ortung von vorausfahrenden Fahrzeugen. Er kann beispielsweise durch einen vorn im Fahrzeug eingebauten Radarsensor gebildet werden.

Das Datenverarbeitungssystem 14 wird beispielsweise durch einen oder mehrere Mikrorechner und zugehörige Software sowie Peripheriesysteme gebildet und kann neben den hier erläuterten Funktionen auch andere Funktionen im Rahmen eines ACC-Systems ausführen. Gezeigt und beschrieben werden hier nur die Systemkomponenten des Datenverarbeitungssystems 14, die für die Erläuterung der Erfindung von Bedeutung sind. Diese Komponenten können als spezialisierte Hardware oder auch als Softwaremodule implementiert sein. Im einzelnen umfaßt das Datenverarbeitungssytem 14 eine Datenaufbereitungseinheit 16 für den Ortungssensor 10, eine Datenaufbereitungseinheit 18 für die Längsbeschleunigungssensoreinrichtung 12, eine Erkennungseinrichtung 20 zum Erkennen verschiedener vorgegebener Kategorien von Fahrumgebungen, eine Entscheidungseinrichtung 22 und zwei Anfahrregler 24, 26.

Die Datenaufbereitungseinheit 16 wertet die Daten des Ortungssensors 10 aus und berechnet daraus die Abstände, Relativgeschwindigkeiten und Azimutwinkel der georteten Objekte, insbesondere der vorausfahrenden Fahrzeuge.

Die Datenaufbereitungseinheit 18 wertet die Daten des Längsbeschleunigungssensors aus und stellt der Entscheidungseinrichtung 22 Fahrbahnsteigungsinformation S zur Verfügung. Die Fahrbahnsteigungsinformation kann vorzugsweise insbesondere eine Mehrzahl von negativen, d.h. einem Gefälle entsprechenden Werten annehmen, um eine feine Anpassung des Anfahrverhaltens an ein Fahrbahngefälle zu erzielen. Beispielsweise kann die Datenaufbereitungseinheit 18 die vom Längsbeschleunigungssensor erfaßte Meßgröße in die Steigung der Fahrbahn am Ort des Fahrzeugs umrechnen, beispielsweise mittels einer Rechenoperation oder unter Zugriff auf eine Umwandlungstabelle, und als Fahrbahnsteigungsinformation S ausgeben. Dazu kann die Datenaufbereitungseinheit beispielsweise auf Fahrzeugdaten zugreifen, wie z.B. den Verlauf der momentanen Fahrgeschwindigkeit. Bei der Fahrbahnsteigungsinformation S kann es sich alternativ beispielsweise um den auf die Hangabtriebskraft zurückführenden Anteil der Längsbeschleunigung handeln.

Die Erkennungseinrichtung 20 dient dazu, verschiedene Fahrumgebungen zu erkennen. Bei den Fahrumgebungen wird dabei zwischen verschiedenen vordefinierten Kategorien unterschieden, beispielsweise "Stadtverkehr" und "Stausituation auf kreuzungsfreier Straße", und die jeweils erkannte Situation wird durch die Erkennungseinrichtung 20 einer dieser vordefinierten Kategorien zugeordnet. Zu diesem Zweck kann beispielsweise die Erkennungseinrichtung 20 unter anderem auf aufbereitete Ortungsdaten des Ortungssensors 10 zugreifen.

Weiterhin weist die Erkennungseinrichtung 20 eine Schnittstelle 28 zu einem im Fahrzeug vorhandenen Navigationssystem sowie eine Schnittstelle 30 zu einem Stauinformationssystem auf, beispielsweise zu einem Verkehrsfunksystem, das hier in das Navigationssystem integriert ist. Anhand der über diese Schnittstellen empfangenen Daten kann die Erkennungseinrichtung 20 beispielsweise erkennen, ob sich das Fahrzeug auf einer innerstädtischen Straße oder auf einer überörtlichen oder überregionalen Straße befindet, ob sich das Fahrzeug vor einer Kreuzung oder auf einer kreuzungsfreien Straße befindet, ob sich das Fahrzeug in einem gemeldeten Stau befindet, und dergleichen.

Mit Hilfe des Ortungssensors 10 wird zumindest das unmittelbar vorausfahrende Fahrzeug geortet. Zumeist sind jedoch auch die weiter vorn fahrenden Fahrzeuge nicht vollständig durch das unmittelbar vorausfahrende Fahrzeug abgeschattet, sodaß sie ebenfalls geortet werden können. Auf diese Weise kann die Erkennungseinrichtung 20 auch dann, wenn keine Staumeldung vorliegt, eine Stausituation oder Stop & Go-Situation erkennen. Im Prinzip kann es für die Erkennung einer Stausituation bereits genügen, daß auf einer kreuzungsfreien, überörtlichen Straße das unmittelbar vorausfahrende Fahrzeug in der Fahrspur anhält. Wahlweise oder zusätzlich kann zur Erkennung der Fahrumgebung jedoch auch auf andere Informationsquellen zurückgegriffen werden, beispielsweise ein Video- und Bildverarbeitungssystem, das Teil des Ortungssystems sein kann.

Zu der Erkennungseinrichtung 20 gehört weiterhin ein Speicher, in dem für jede vordefinierte Kategorie von Fahrumgebungen mindestens ein Dynamikprofil 32, 34 gespeichert ist. Wahlweise können für eine einzelne Kategorie auch mehrere Dynamikprofile gespeichert sein, die den persönlichen Vorlieben des jeweiligen Fahrers Rechnung tragen. Im betrachteten Beispiel sind lediglich zwei Dynamikprofile 32, 34 gezeigt.

Das Dynamikprofil 32 ist durch relativ hohe Werte der Soll-Anfahrbeschleunigung gekennzeichnet und wird in der genannten Fahrumgebung "Stadtverkehr" ausgewählt.

Das Dynamikprofil 34 ist durch eine relativ geringe Werte der Soll-Anfahrbeschleunigung gekennzeichnet und wird in der Fahrumgebung "Stausituation auf einer kreuzungsfreien Straße" ausgewählt. Hier kann die Soll-Anfahrbeschleunigung beispielsweise im Bereich kleiner als 0,2 m/s² sein, etwa 0,1 m/s².

Jedes Dynamikprofil ist definiert durch wenigstens einen Parameter oder einen Satz von Parametern, die die Funktionsweise der von dem Datenverarbeitungssystem 14 in der jeweiligen Fahrumgebung vorzunehmenden Geschwindigkeitsregelung bestimmen. Einer der Parameter ist insbesondere eine Soll-Anfahrdynamik. Im beschriebenen Beispiel ist die Soll-Anfahrdynamik ein Parameter a, der die von einer Anfahrregelung zu erzielenden Sollbeschleunigung beim Anfahren (ACC-Sollbeschleunigung) darstellt.

Der dem ausgewählten Dynamikprofil 32, 34 entsprechende Parameter a wird in die Entscheidungseinrichtung 22 eingespeist, wie in Fig. 1 durch einen Schalter 36 symbolisiert wird. Wenn keine Fahrumgebung erkannt wird, kann der Schalter 36 auch eine Neutralstellung einnehmen, so daß dann die Entscheidungseinrichtung 22 einen Standardwert für die Soll-Anfahrdynamik a verwendet.

Die Auswahl einer an die erkannte Fahrumgebung angepassten Soll-Anfahrdynamik a durch die Erkennungseinrichtung kann beispielsweise unter zusätzlicher Berücksichtigung von Fahrsituationsdaten erfolgen. Unter Fahrsituationsdaten sollen hier das Fahrverhalten des eigenen Fahrzeugs charakterisierende oder bestimmende Daten verstanden werden, die sich nicht auf andere Fahrzeuge beziehen, wie etwa Information über Fahrbahnnässe, Fahrbahntemperatur, ein Anhängerbetrieb, oder die rollende Masse, beispielsweise die Zuladung, eine Anhängelast oder dergleichen. Somit kann das Anfahrverhalten noch besser an die gegebene Fahrsituation angepasst werden. Dazu kann die Erkennungseinrichtung 20 beispielsweise auf Daten eines von dem Datenverarbeitungssytem 14 umfaßten oder diesem zugeordneten Fahrreglers zugreifen.

Anstelle des beschriebenen Parameters a kann beispielsweise als Soll-Anfahrdynamik a auch eine Funktion definiert sein, die für jede Differenz zwischen Istgeschwindigkeit und Sollgeschwindigkeit des eigenen Fahrzeugs einen bestimmten Beschleunigungswert oder einen bestimmten Beschleunigungsverlauf vorgibt.

Die Entscheidungseinrichtung 22 erhält als Eingangssignale neben dem Dynamikprofil 32, 34 die von der Datenaufbereitungseinheit 16 berechneten Ortungsdaten der vom Ortungssensor 10 georteten Objekte sowie die von der Datenaufbreitungseinheit 18 ausgegebene Fahrbahnsteigungsinformation S. Weiter erhält die Entscheidungseinrichtung 22 ein Zeitsignal T, das die Zeitdauer angibt, in der sich das Fahrzeug in dem von der ACC-Fahrregelung herbeigeführten Stillstand befindet. Auf der Grundlage der aufbereiteten Ortungsdaten entscheidet die Entscheidungseinrichtung 22, ob ein Anfahrvorgang durch einen der Anfahrregler 24, 26 eingeleitet werden soll, beispielsweise wenn ein vorderes Fahrzeug anfährt.

Sofern die seit dem Anhalten vergangene Zeit T unterhalb eines Schwellwertes von beispielsweise 2 Sekunden ist, erfolgt die Einleitung des Anfahrvorgangs automatisch. Ist ein größerer Zeitraum vergangen, so wird aus Sicherheitsgründen dem Fahrer über eine Signalisierungseinrichtung 38 die Anfahrbereitschaft signalisiert, und der Anfahrvorgang wird erst nach Betätigung einer Bestätigungseinrichtung 40 durch den Fahrer eingeleitet.

Die Entscheidungseinrichtung 22 entscheidet aufgrund der Fahrbahnsteigungsinformation S und des von der Erkennungseinrichtung 20 ausgewählten Dynamikprofils 32, 34 über die Aktivierung und Deaktivierung der beiden Anfahrregler 24, 26, und die Ortungsdaten der vom Ortungssensor 10 georteten Objekte werden jeweils an den aktiven Anfahrregler weitergeleitet.

Bei dem Anfahrregler 24 kann es sich um einen "regulären" Anfahrregler handeln, wie er auch in bekannten Anfahrassistenten eingesetzt wird. Der Anfahrregler 24 steuert den Anfahrvorgang, indem beispielsweise auf einen Anfahrbefehl hin ein Antriebsmoment für das Antriebssystem 42 vorgegeben wird und nach erreichen eines ausreichenden Antriebsmoments eine Bremse des Bremssystems 44 gelöst wird. Der Anfahrregler 24 tritt in die Regelung des Antriebsmoments in Abhängigkeit von den Ortungsdaten des Ortungssensors 10 ein. Erforderlichenfalls greift der Anfahrregler 24 auch in das Bremssystem 44 des Fahrzeugs ein, beispielsweise dann, wenn das vorausfahrende Fahrzeug wieder anhält.

Der zweite Anfahrregler 26 wird bei einem Anfahrvorgang verwendet, bei dem sich das Fahrzeug an einem Gefälle mit ausreichender Hangabtriebskraft befindet, um mittels der Hangabtriebskraft zu beschleunigen. Auf einen Anfahrbefehl hin gibt der Anfahrregler 26 ein Bremsmoment des Bremssystems 44 vor und tritt in eine Regelung des Bremsmoments des Bremssystems 44 ein, um den Anfahrvorgang in Abhängigkeit von den Ortungsdaten des Ortungssensors 10 zu regeln. Zu diesem Zweck greift der Anfahrregler 26 in das Bremssystem 44 des Fahrzeugs ein. Das vorgegebene Bremsmoment entspricht einem nach Gefälle und Masse des Fahrzeugs zu erwartetenden Bremsmoment bzw. Bremsdruck um im gebremsten Zustand mit der Soll-Anfahrbeschleunigung zu rollen. Beispielsweise entspricht ein Gefälle von 10% annähernd einer maximalen Hangabtriebsbeschleunigung von 1 m/s² und kann nach Abzug von Verlusten beispielsweise eine Beschleunigung eines ungebremsten Fahrzeugs von maximal etwa 0,85 bis 0,9 m/s² bewirken. Beim Anfahrvorgang wird keine Antriebsleistung vom Antriebssystem 42 abgerufen, sondern der Anfahrvorgang wird allein durch die Hangabtriebskraft bewirkt bzw., falls beispielsweise auch im Leerlaufzustand des Antriebssystems ein geringfügiges Drehmoment an der Abtriebsseite eines Drehmomentwandlers anliegt, im wesentlichen durch die Hangabtriebskraft. D.h. das Fahrzeug rollt antriebslos.

Falls während des Anfahrvorgangs die durch die Hangabtriebskraft erreichbare Beschleunigung nicht mehr ausreichend für die aktuelle Soll-Anfahrdynamik ist, kann eine Umschaltung auf den Anfahrregler 24 erfolgen, der dann den weiteren Verlauf des Anfahrvorgangs durch Regelung des Antriebsmomentes steuert. Nach Vollendung des Anfahrvorgangs wird beispielsweise auf einen regulären Fahrregler umgeschaltet. Beispielsweise wird der Anfahrvorgang bei Erreichen einer vorgegebenen Fahrgeschwindigkeit von z.B. 15 km/h beendet. Gegebenenfalls kann der Anfahrregler 24 auch die Funktion eines regulären ACC-Fahrreglers übernehmen.

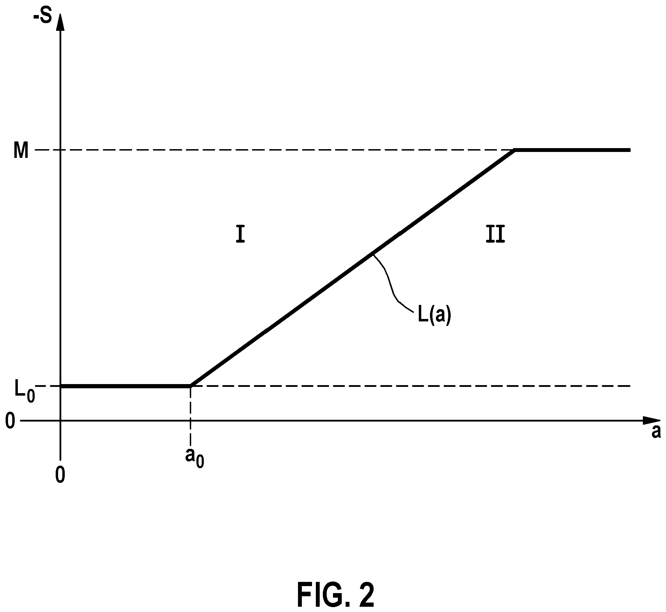

Figur 2 zeigt schematisch eine in der Entscheidungseinrichtung 22 implementierte exemplarische Entscheidungsfunktion zur Entscheidung über die Aktivierung der Anfahrregler 24, 26 in Abhängigkeit von dem Fahrbahngefälle -S und der Soll-Anfahrdynamik a ohne Berücksichtigung weitere Fahrsituationsparameter. In Figur 2 stellt die X-Achse das Soll-Antriebsmoment a dar, beispielsweise in der Einheit m/s². Die Y-Achse stellt ein Fahrbahngefälle dar und entspricht im beschriebenen Beispiel dem negativen der Fahrbahnsteigungsinformation S. Das Fahrbahngefälle -S ist -S = -tan a, wobei a der Winkel ist, mit dem die Fahrbahn in Fahrtrichtung ansteigt. Bei einem Gefälle ist α < 0 und somit -S > 0.

Wenn das Gefälle -S kleiner als ein Mindestreferenzwert L₀ ist, sowie bei positiver Steigung (-S < 0), verwendet die Entscheidungseinrichtung 22 stets den Anfahrregler 24 zum Anfahren.

Bei einem Gefälle größer als L₀ (L₀ < -S) trifft die Entscheidungseinrichtung 22 die Auswahl entsprechend einem Vergleich des Fahrbahngefälles -S mit einem von der Soll-Anfahrdynamik abhängigen Referenzwert für das Fahrbahngefälle - S. Beispielsweise kann der Referenzwert beschrieben werden als L(a) = L₀ + k ? (a - a₀), wobei k im Beispiel eine Konstante ist, und wobei bei einer Referenz-Soll-Anfahrdynamik a₀ gilt: L(a₀) = L₀.

Bei -S > L(a) wird der Anfahrregler 26 zum Anfahren verwendet. Der Referenzwert ist vorzugsweise so bestimmt, daß die aufgrund des Fahrbahngefälles -S vorhandene Hangabtriebskraft ausreichend ist, um eine Beschleunigung des eigenen Fahrzeugs zu bewirken, die mindestens der Soll-Anfahrbeschleunigung a, gegebenenfalls abzüglich oder zuzüglich eines vorbestimmten Toleranzwertes, entspricht. Falls hingegen -S ≤ L(a), so wird der Anfahrregler 24 verwendet. Die entsprechenden Parameterbereiche I, II von -S und a oberhalb und unterhalb des Referenzwertes sind, unter zusätzlicher Berücksichtigung eines optionalen oberen Referenz-Grenzwertes M, in Figur 2 gekennzeichnet. Wenn das Gefälle -S oberhalb des oberen Grenzwertes M ist, wird stets der Anfahrregler 26 zur Steuerung des Anfahrvorgangs verwendet.

Im Bereich a > a₀ weist der von a abhängige Referenzwert eine Vielzahl von mit zunehmendem a zunehmenden Werten auf, so daß eine flexible Anpassung der Wahl der Anfahrstrategie an das Gefälle und die Soll-Anfahrbeschleunigung ermöglicht wird. Insgesamt steigt der Referenzwert zumindest bereichsweise mit ansteigendem a an.

## Patentansprüche

1. Anfahrassistent für Kraftfahrzeuge, mit einem Anfahrregler (24; 26) zur Einleitung und Steuerung eines Anfahrvorgangs und mit einer Erkennungseinrichtung (20) zum Erkennen verschiedener vorgegebener Kategorien von Fahrumgebungen und zur Auswahl einer an die erkannte Fahrumgebung angepassten Soll-Anfahrdynamik, wobei die Soll-Anfahrdynamik einen Parameter in Form einer Soll-Anfahrbeschleunigung umfasst, der eine von dem Anfahrregler (24; 26) zu erzielende Sollbeschleunigung beim Anfahren darstellt, **gekennzeichnet durch** eine Entscheidungseinrichtung (22), die dazu ausgebildet ist, abhängig von einem Fahrbahngefälle und von der Soll-Anfahrdynamik eine Anfahrstrategie auszuwählen aus wenigstens einer ersten Anfahrstrategie zum von einem Antriebssystem (42) getriebenen Anfahren und einer zweiten Anfahrstrategie zum Anfahren im wesentlichen durch eine Hangabtriebskraft,
wobei der Anfahrregler (26) dazu ausgebildet ist, beim Anfahren gemäß der zweiten Anfahrstrategie ein Bremsmoment eines Bremssystems (44) zu steuern, um den Anfahrvorgang zu steuern, wobei der Anfahrregler (26) dazu eingerichtet ist, ein Bremsmoment vorzugeben, das einem nach dem Fahrbahngefälle und der Masse des Fahrzeugs zu erwartendem Bremsmoment entspricht, um im gebremsten Zustand mit der Soll-Anfahrbeschleunigung zu rollen.

2. Anfahrassistent nach Anspruch 1, **dadurch gekennzeichnet, dass** die Erkennungseinrichtung (20) dazu ausgebildet ist, bei der Erkennung der Kategorie zu unterscheiden, ob sich das eigene Fahrzeug auf einer innerstädtischen Straße oder auf einer überörtlichen oder überregionalen Straße befindet.

3. Anfahrassistent nach Anspruch 1 oder 2, **dadurch gekennzeichnet, dass** die Erkennungseinrichtung (20) dazu ausgebildet ist, bei der Erkennung der Kategorie zu unterscheiden, ob sich das eigene Fahrzeug auf einer kreuzungsfreien Straße oder auf einem Straßenabschnitt vor einer Kreuzung oder Einmündung befindet.

4. Anfahrassistent nach einem der vorstehenden Ansprüche, **dadurch gekennzeichnet, dass** die Erkennungseinrichtung (20) eine Schnittstelle (28) zu einem Navigationssystem aufweist.

5. Anfahrassistent nach einem der vorstehenden Ansprüche, **dadurch gekennzeichnet, dass** die Erkennungseinrichtung eine Schnittstelle (30) zu einem Stauinformationssystem aufweist.

6. Anfahrassistent nach einem der vorstehenden Ansprüche, weiter **gekennzeichnet durch** eine Sensoreinrichtung (12) zum Erfassen wenigstens einer vom Fahrbahngefälle am Ort des Fahrzeugs abhängigen Messgröße.

7. Anfahrassistent nach Anspruch 6, **dadurch gekennzeichnet, dass** die Sensoreinrichtung (12) einen Längsbeschleunigungssensor zur Erfassung einer Längsbeschleunigung des eigenen Fahrzeuges umfasst.

8. Anfahrassistent nach einem der vorstehenden Ansprüche, **dadurch gekennzeichnet, dass** die Entscheidungseinrichtung (22) dazu ausgebildet ist, die zweite Anfahrstrategie zum Anfahren im wesentlichen durch eine Hangabtriebskraft zu wählen, wenn das Fahrbahngefälle größer ist als ein von der Soll-Anfahrdynamik abhängiger Referenzwert.

9. Anfahrassistent nach einem der vorstehenden Ansprüche, **dadurch gekennzeichnet, dass** der Anfahrassistent dazu ausgebildet ist, beim Anfahren gemäß der zweiten Anfahrstrategie den Anfahrvorgang so zu steuern, daß kein Antriebsmoment des Antriebssystems (42) angefordert wird.

## Claims

1. Starting assistant for motor vehicles, having a starting controller (24; 26) for initiating and controlling a starting process and having a detection device (20) for detecting various predefined categories of driving surroundings and for selecting a setpoint starting dynamic which is adapted to the detected driving surroundings, wherein the setpoint starting dynamic comprises a parameter in the form of a setpoint starting acceleration, which represents a setpoint acceleration which is to be achieved by the starting controller (24; 26) when starting, **characterized by** a decision device (22) which is designed to select a starting strategy as a function of a carriageway gradient and of the setpoint starting dynamic, from at least a first starting strategy for starting driven by a drive system (42), and a second starting strategy for starting essentially by means of a downhill-slope force,
wherein the starting controller (26) is designed to control, when starting according to the second starting strategy, a braking torque of a brake system (44) in order to control the starting process, wherein the starting controller (26) is configured to predefine a braking torque which corresponds to a braking torque which is to be expected according to the carriageway gradient and the mass of the vehicle, in order to roll with the setpoint starting acceleration in the braked state.

2. Starting assistant according to Claim 1, **characterized in that** the detection device (20) is designed to differentiate, during the detection of the category, whether the vehicle in question is on a city centre road or on a road between locality or a regional road.

3. Starting assistant according to Claim 1 or 2, **characterized in that** the detection device (20) is designed to differentiate, during the detection of the category, whether the vehicle in question is on a road without on intersection or a section of road before an intersection or junction.

4. Starting assistant according to one of the preceding claims, **characterized in that** the detection device (20) has an interface (28) with a navigation system.

5. Starting assistant according to one of the preceding claims, **characterized in that** the detection device has an interface (30) with a traffic congestion information system.

6. Starting assistant according to one of the preceding claims, also **characterized by** a sensor device (12) for acquiring at least one measurement variable which is dependent on the carriageway gradient at the location of the vehicle.

7. Starting assistant according to Claim 6, **characterized in that** the sensor device (12) comprises a longitudinal acceleration sensor for acquiring a longitudinal acceleration of the vehicle in question.

8. Starting assistant according to one of the preceding claims, **characterized in that** the decision device (22) is designed to select the second starting strategy for starting essentially by means of a downhill-slope force if the carriageway gradient is greater than a reference value which is dependent on the setpoint starting dynamic.

9. Starting assistant according to one of the preceding claims, **characterized in that** the starting assistant is designed to control the starting process during starting according to the second starting strategy in such a way that a driving torque of the drive system (42) is not requested.

## Revendications

1. Assistant au démarrage de véhicules automobiles, présentant un régulateur de démarrage (24; 26) qui lance et commande une opération de démarrage et un dispositif de détection (20) qui détecte différentes catégories prédéterminées d'environnement de conduite et qui sélectionne une dynamique de démarrage de consigne adaptée à l'environnement de conduite détecté,
la dynamique de démarrage de consigne comprenant un paramètre présentant la forme d'une accélération de démarrage de consigne qui représente une accélération de consigne que doit atteindre le régulateur de démarrage (24; 26) lors du démarrage,
**caractérisé par**
un dispositif de décision (22) configuré pour, en fonction de la pente de la chaussée et de la dynamique de démarrage de consigne, sélectionner une stratégie de démarrage parmi au moins une première stratégie de démarrage pour des démarrages entraînés par un système d'entraînement (42) et une deuxième stratégie de démarrage pour le démarrage essentiellement par une force exercée par une remorque,
le régulateur de démarrage (26) étant configuré pour, lors d'un démarrage selon la deuxième stratégie de démarrage, commander un couple de freinage d'un système de freinage (44) pour commander l'opération de démarrage, le régulateur de démarrage (26) étant conçu pour imposer un couple de freinage qui correspond à un couple de freinage qu'on peut attendre de la pente de la chaussée et de la masse du véhicule, pour rouler à l'accélération de démarrage de consigne en situation freinée.

2. Assistant au démarrage selon la revendication 1, **caractérisé en ce que** le dispositif de détection (20) est configuré pour distinguer dans la détection de la catégorie si le véhicule propre est situé sur une chauffée urbaine ou sur une chaussée locale ou régionale d'ordre supérieur.

3. Assistant au démarrage selon les revendications 1 ou 2, **caractérisé en ce que** le dispositif de détection (20) est configuré pour distinguer dans la détection de la catégorie si le véhicule propre est situé sur une route sans croisement ou sur une section de route située avant un croisement ou une bretelle de raccordement.

4. Assistant au démarrage selon l'une des revendications précédentes, **caractérisé en ce que** le dispositif de détection (20) présente une interface (28) avec un système de navigation.

5. Assistant au démarrage selon l'une des revendications précédentes, **caractérisé en ce que** le dispositif de détection présente une interface (30) avec un système d'information sur les embouteillages.

6. Assistant au démarrage selon l'une des revendications précédentes, **caractérisé en outre par** un dispositif de capteur (12) qui détecte au moins une grandeur de mesure qui dépend de la pente de la chaussée à l'emplacement du véhicule.

7. Assistant au démarrage selon la revendication 6, **caractérisé en ce que** le dispositif de capteur (12) comporte un capteur d'accélération longitudinale qui détecte une accélération longitudinale du véhicule propre.

8. Assistant au démarrage selon l'une des revendications précédentes, **caractérisé en ce que** le dispositif de détection (22) est configuré pour sélectionner la deuxième stratégie de démarrage en vue de démarrer essentiellement par une force exercée par une remorque lorsque la pente de la chaussée est supérieure à une valeur de référence qui dépend de la dynamique de démarrage de consigne.

9. Assistant au démarrage selon l'une des revendications précédentes, **caractérisé en ce que** l'assistant de démarrage est configuré pour commander l'opération de démarrage lors d'un démarrage selon la deuxième stratégie de démarrage de telle sorte qu'aucun couple d'entraînement ne soit demandé au système d'entraînement (42).
